Europäisches Patentamt

European Patent Office

Office européen des brevets

(11) Publication number: **0 297 764**
**A1**

## EUROPEAN PATENT APPLICATION

(21) Application number: 88305638.4

(22) Date of filing: 21.06.88

(51) Int. Cl.⁴: **G03H 1/02** , **G11B 23/00** ,
**B65D 41/00** , **B65D 51/24**

(30) Priority: 29.06.87 GB 8715179

(43) Date of publication of application:
04.01.89 Bulletin 89/01

(84) Designated Contracting States:
AT BE CH DE ES FR GB GR IT LI LU NL SE

(71) Applicant: **METAL CLOSURES GROUP PLC**
**Bromford Lane P.O. Box 32**
**West Bromwich West Midlands B70 7HY(GB)**

(72) Inventor: **Gloss, Leonard James**
**41 Chillington Drive Codsall**
**Wolverhampton West Midlands WV8 1**
**AJ(GB)**

(74) Representative: **Brooke-Smith, Fred et al**
**STEVENS, HEWLETT & PERKINS 5 Quality**
**Court Chancery Lane**
**London WC2A 1HZ(GB)**

(54) Improvements relating to the manufacture of articles carrying reflective holograms.

(57) A hologram is produced on a metallic surface of an article coated with a transparent thermoplastic material by impressing a holographic image into the metallic surface either before the application of the coating or through the coating. The metallic surface may be a smooth matt surface but is preferably a specular or bright surface and may be produced by metallization or vacuum deposition or electroplating on paper or card articles. Alternatively the article may have a surface layer of tin or other relatively soft metal applied to it to form the surface into which the holographic image is impressed. The plate bearing the holographic negative may be heated to assist in impressing the image into the metallic surface. In another method an article is coated with an opaque thermoplastic material and a holographic image is then impressed in the surface of the opaque coating.

_FIG.1_

# IMPROVEMENTS RELATING TO THE MANUFACTURE OF ARTICLES CARRYING REFLECTIVE HOLOGRAMS

This invention relates to the manufacture of articles carrying reflective holograms.

According to this invention in one aspect there is provided a method of producing a holographic image on an article having a metallic surface coated with a transparent thermoplastic material, comprising impressing the holographic image into the metallic surface either before the application of the coating or through the coating .

According to this invention in another aspect there is provided a method of producing a holographic image on an article comprising coating the article with an opaque thermoplastic substance and then comprising the holographic image in the surface of said opaque substance.

The invention also provides an article having a holographic image applied to a surface thereof by a method as set forth in either of the preceding paragraphs.

When the article or the portion thereof which is to carry the reflective hologram has a non-reflective surface, said surface or surface portion may, in an initial step, be rendered specular or brightly reflective by metallizing or by vacuum deposition or electroplating thereon of a specular or bright reflective surface layer. In some cases however the surface into which the image is impressed may be a matt surface.

The holographic image may be impressed into said metallic surface, whether directly or through the thermoplastic material, by means of a heated embossed roller or plate.

The invention will now be described in more detail. The description makes reference by way of example to the accompanying diagrammatic drawings in which:-

Figure 1 illustrates the first stage in the manufacture of an article by a method according to the invention, and

Figures 2 and 3 respectively illustrate two alternative ways of completing the method.

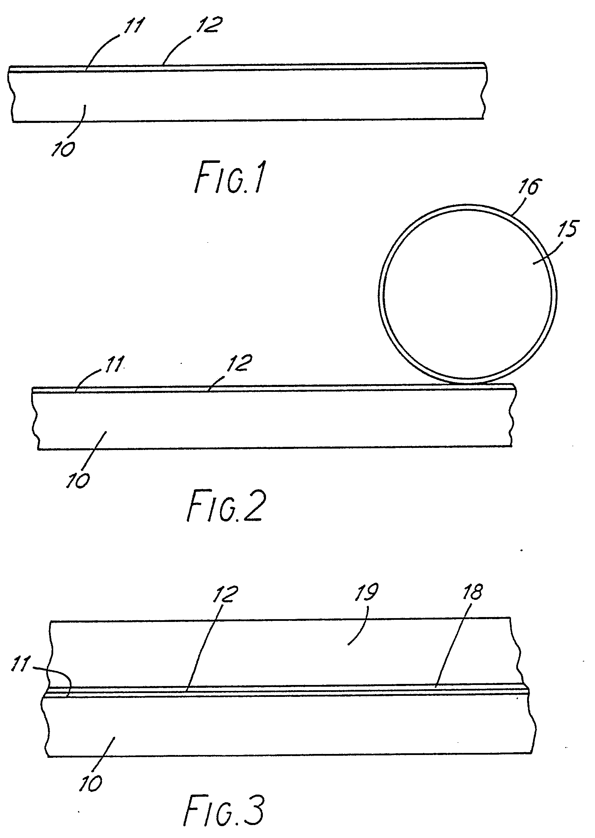

Referring to the drawings, the article 10 shown is of sheet metal having a specular or bright reflective upper surface 11. Surface 11 has then applied to it a lacquer coating 12 of a transparent thermoplastic material such as polyvinylchloride or a polyester. The thickness of the coating 12 may be of the order of 60 microns. The holographic image is then impressed into the surface 11 of the metal through the coating 12 by pressure with or without heat. In the arrangement shown in Figure 2 a heated roller 15 having on its periphery a metal shim 16 on which the holographic image has been formed by etching is pressed down and rolled across the coating 12 to impress the image into the metallic surface 11 through the coating 12.

Alternatively the required image is stamped into surface 11 through the coating 12 by a flat shim 18 on which the image has been formed by etching and which is employed in conjunction with a heated pressure platen 19 as shown in Figure 3. A protective second transparent coating of a thermoplastic lacquer may if desired then be applied .

The holographic image may alternatively be impressed directly on to the metallic surface of the article, a coating of lacquer or other transparent thermoplastic material being subsequently applied to the metal surface to protect the image against damage by scratching, impact or abrasion. For the purposes of this alternative method. a coating of tin or other relatively soft metal may be applied to the surface to the article and the image then impressed on the soft metal coating. In these methods it may be unnecessary to heat the roller or platen employed in impressing the holographic image in the metallic surface.

If desired, the surface to which the image is applied may be a matt surface. However, the best results are achieved when the article has a bright reflective or specular, surface as when the article is made from metal. Where the article is in the form of a sheet of paper or card, the surface of the article may in a preparatory step be given a specular or bright reflective surface by metallization or vacuum deposition, this surface then being coated with the thermoplastics material.

Where articles are to be formed from blanks stamped out of metal strip or sheet material in a continuous process, as in the case of aluminium alloy strip or sheet material for making into caps for containers, it will be convenient to employ a roller to impress the holographic image into the strip of sheet material, as illustrated in Figure 2. Individual articles may also be embossed using a pressure platen: heat will be employed if the reflective surface is thermoplastic.

The methods described above obviate the need for laminating or adhering a previously prepared plastic film bearing the holographic image to a supporting substrate such as metal. paper, glass or plastics.

When a substrate such as metal, paper or glass is coated with an opaque thermoplastic substance, the substance itself forms a reflective surface into which a holographic image can be impressed direct, using heat and pressure as described above in relation to Figures 2 and 3.

## Claims

1. A method of producing a holographic image on an article having a metallic surface coated with a transparent thermoplastic material, comprising impressing the holographic image into the metallic surface either before the application of the coating or through the coating .

2. A method as claimed in claim 1 wherein, where the holographic image is impressed into the metallic surface through the coating, a second coating of transparent thermoplastic material is thereafter applied over the first coating.

3. A method as claimed in claim 1 or claim 2, wherein said image is impressed into said surface by heat and pressure.

4. A method as claimed in any one of claims 1 to 3, wherein said metallic surface is bright or specular.

5. A method as claimed in any one of claims 1 to 4, wherein the metallic surface is a metallized surface formed on a non-metallic substrate.

6. A method of producing a holographic image on an article comprising coating the article with an opaque thermoplastic substance and then comprising the holographic image in the surface of said opaque substance.

7. An article having a substrate, e.g. of metal, paper or glass, coated with an opaque thermoplastic substance into which a holographic image has been impressed by a method as claimed in claim 6.

8. An article having a metallic surface coated with a transparent thermoplastic material and having a holographic image impressed into said surface either directly or through said coating.

9. An article as claimed in claim 8 wherein, where the image is impressed into the metallic surface through the said coating, a protective further coating of a transparent thermoplastic material is applied over the first said coating.

10. An article as claimed in claim 8 or claim 9, wherein said metallic surface is of tin, aluminium, copper, silver, gold or other relatively soft metal.

11. A cap for a container, which cap has a hologram applied thereto by a method as claimed in any one of claims 1 to 6.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENT ABSTRACTS OF JAPAN, vol. 7, no. 156 (P-209)[1301], 8th August 1983; & JP-A-58 65 466 (DAINIPPON INSATSU K.K.) 19-04-1983 * Abstract * | 1-3,5,6 ,8-10 | G 03 H 1/02 G 11 B 23/00 B 65 D 41/00 B 65 D 51/24 |
| Y | US-A-3 703 407 (HANNAN et al.) * Column 2, lines 13-26; figure * | 1-3,5,6 ,8-10 | |
| X | EP-A-0 145 481 (E.I. DU PONT DE NEMOURS & CO.) * Page 3, lines 11-22 * | 1,5,8, 10 | |
| A | EP-A-0 177 852 (HOLTRONIC GmbH) * Page 4, lines 12-19; page 2, line 14; claim 5 * | 4 | |
| X | US-A-4 184 700 (GREENAWAY) * Column 2, lines 9-55; column 4, lines 24-33; column 4, lines 4-14 * | 6,7 | |
| A | US-A-3 413 743 (GOODHUE) * Column 1, lines 32-58 * | 11 | TECHNICAL FIELDS SEARCHED (Int. Cl.4) |
| A | PATENT ABSTRACTS OF JAPAN, vol. 11, no. 194 (P-588)[2641], 23rd June 1987; & JP-A-62 17 783 (DAINIPPON PRINTING CO., LTD) 26-01-1987 | | G 03 H B 65 D G 11 B G 06 K |

The present search report has been drawn up for all claims

| Place of search | Date of completion of the search | Examiner |
|---|---|---|
| THE HAGUE | 07-10-1988 | KLEIKAMP B.M.H.H. |

EPO FORM 1503 03.82 (P0401)